# EUROPEAN PATENT APPLICATION

(11) **EP 4 427 830 A1**
(43) Date of publication of application: **11.09.2024**
(21) Application number: 22888715.4
(22) Date of filing: 12.01.2022
(51) Int. Cl.: B01D 45/02, G21C 15/16

(54) **STEAM-WATER SEPARATOR AND WASTE HEAT REMOVAL SYSTEM**

(30) Priority: 05.11.2021 CN 202111306461
(71) Applicant: China Nuclear Power Technology Research Institute Co., Ltd., Shenzhen, Guangdong 518031 (CN); China General Nuclear Power Corporation, Shenzhen, Guangdong 518028 (CN); CGN Power Co., Ltd., Shenzen, Guangdong 518028 (CN); China Nuclear Power Engineering Co., Ltd., Shenzhen, Guangdong 518124 (CN)
(72) Inventor: LIANG, Huo, Shenzhen, Guangdong 518031 (CN); LIU, Jinlin, Shenzhen, Guangdong 518031 (CN); BAO, Xiaoli, Shenzhen, Guangdong 518031 (CN); LU, Changdong, Shenzhen, Guangdong 518031 (CN); JI, Wenying, Shenzhen, Guangdong 518031 (CN); CUI, Xuyang, Shenzhen, Guangdong 518031 (CN); LIU, Zhonghao, Shenzhen, Guangdong 518031 (CN); WANG, Xianmao, Shenzhen, Guangdong 518031 (CN); CHEN, Yunyin, Shenzhen, Guangdong 518031 (CN); CHEN, Yichen, Shenzhen, Guangdong 518031 (CN); OUYANG, Yong, Shenzhen, Guangdong 518031 (CN); LU, Xianghui, Shenzhen, Guangdong 518031 (CN)
(74) Representative: Greaves Brewster LLP
(86) International application number: PCT/CN2022/071567
(87) International publication number: WO 2023/077674

(57) **Abstract**

A steam-water separator (10) and a waste heat removal system. The steam-water separator (10) comprises a separator body (100) and first connecting pipes (200). A first accommodation cavity (110) is provided in the separator body (100). A water inlet (120) in communication with the first accommodation cavity (110) is provided on one end of the separator body (100). The separator body (100) is provided with a plurality of first connecting holes (130) in communication with the first accommodation cavity (110). A plurality of first connecting pipes (200) are arranged. The number of first connecting pipes (200) is equal to the number of first connecting holes (130). The first connecting pipes (200) are connected to the first connecting holes (130) in a one-to-one correspondence manner.

## Description

### CROSS-REFERENCE TO RELATED APPLICATIONS

This application claims priority of Chinese Patent Application No. 202111306461.8, filed on November 5, 2021, entitled "STEAM-WATER SEPARATOR AND WASTE HEAT REMOVAL SYSTEM", the entire content of which is incorporated herein in its entirety.

### TECHNICAL FIELD

The present application relates to the technical field of nuclear power, and in particular to a steam-water separator and a waste heat removal system.

### BACKGROUND

The conventional steam-water separator is located below a dryer and a gravity separation space in a steam generator of a nuclear power plant, and is configured to remove water suspended in steam that cannot be discharged through a steam trap. Generally, the steam-water separator used in a steam system is only suitable for working conditions of steam saturation state, and does not have the function of breaking up large bubbles, thus the corrosion effect of cavitation on the pipeline components cannot be reduced.

### SUMMARY

According to various exemplary embodiments of the present application, a steam-water separator and a waste heat removal system are provided.

A steam-water separator is provided according to the embodiment of the present application provides, which includes a separator body provided with a first accommodation cavity, an end of the separator body being provided with a water inlet in communication with the first accommodation cavity, and the separator body being provided with a plurality of first connecting holes in communication with the first accommodation cavity; and a plurality of first connecting pipes, the number of the first connecting pipes is the same as the number of the first connecting holes, and the first connecting pipes are connected to the first connecting holes in a one-to-one correspondence.

In one of the embodiments, the separator body includes a housing and a bottom plate, the housing is connected to the bottom plate to enclose the first accommodation cavity, the water inlet is provided on the bottom plate, the first connecting holes are provided on the housing.

In one of the embodiments, the steam-water separator further includes a second connecting pipe, one end of the second connecting pipe is connected to the water inlet, and the other end of the second connecting pipe is provided with an internal thread.

In one of the embodiments, the steam-water separator further includes a reinforcing rib, the reinforcing rib is in a shape of a right-angled triangle, and two right-angled sides of the reinforcing rib are connected to the bottom plate and the second connecting pipe, respectively

In one of the embodiments, a plurality of reinforcing ribs are provided, and the plurality of reinforcing ribs are arranged in an annular array around an axis of the second connecting pipe.

In one of the embodiments, the steam-water separator further includes a plurality of nozzles, the number of the nozzles is the same as the number of the first connecting pipes, and the nozzles are connected to the first connecting pipes in a one-to-one correspondence.

In one of the embodiments, the plurality of nozzles are threadedly connected to the first connecting pipes.

In one of the embodiments, a sum of opening areas of the plurality of nozzles is greater than a cross-sectional area of the second connecting pipe.

In one of the embodiments, an opening area of each nozzle sequentially increases from an end thereof away from the housing to an end thereof connected to the housing.

In one of the embodiments, a diameter of a top opening of the nozzle located at a top portion of the housing is less than a diameter of a top opening of the nozzle located at a bottom portion of the housing.

A waste heat removal system is further provided according to the embodiment of the present application, which includes the aforementioned steam-water separator.

In one of the embodiments, the waste heat removal system further includes a water tank provided with a second accommodation cavity and a gas outlet in communication with the second accommodation cavity, and the steam-water separator being provided in the second accommodation cavity; a starting box provided with a third accommodation cavity and a fourth accommodation cavity that are spaced apart, the third accommodation cavity being configured to accommodate cooling water, and the fourth accommodation cavity being configured to accommodate high-pressure nitrogen; and an air-cooled heat exchanger, wherein a water inlet end of the air-cooled heat exchanger is in communication with both the second accommodation cavity and the third accommodation cavity, and a water outlet end of the air-cooled heat exchanger is in communication with both the first accommodation cavity and the fourth accommodation cavity.

In one of the embodiments, the waste heat removal system further includes a first control valve provided at the water inlet end of the air-cooled heat exchanger and configured to control the water inlet end of the air-cooled heat exchanger to be connected to or disconnected from the third accommodation cavity; and a second control valve provided at the water outlet end of the air-cooled heat exchanger to control the water outlet end of the air-cooled heat exchanger to be connected to or disconnected from the fourth accommodation cavity.

In one of the embodiments, he waste heat removal system further includes a second isolation valve, wherein one end of the second isolation valve is in communication with the steam-water separator, and the other end of the second isolation valve is in communication with both the second control valve and the water outlet end of the air-cooled heat exchanger; a check valve, wherein one end of the check valve is in communication with the second accommodation cavity, and the other end of the check valve is in communication with both the first control valve and the water inlet end of the air-cooled heat exchanger; and a first isolation valve, wherein both ends of the first isolation valve are in communication with the second accommodation cavity and a water inlet end of the check valve, respectively.

The steam-water separator and the waste heat derivation system of the present applicant includes the separator body and the first connecting pipe. The separator body is provided with the first accommodation cavity, the end of the separator body is provided with the water inlet in communication with the first accommodation cavity, and the separator body is provided with the plurality of first connecting holes in communication with the first accommodation cavity. The plurality of first connecting pipes are provided, the number of the first connecting pipes is the same as the number of the first connecting holes, and the first connecting pipes are connected to the first connecting holes in a one-to-one correspondence. When the steam-water separator is in use, steam-water mixture enters the first accommodation cavity, and the first accommodation cavity is separated from a cold water region outside the separator body through the separator body, so that the cavitation phenomenon will not occur in the first accommodation cavity. Under the combined action of the obstruction of the separator body and the bubble buoyancy, the steam-water mixture will generate a stratification effect in the first accommodation cavity. Lighter gas aggregates at the top portion of the steam-water separator, and heavier liquid aggregates at a lower part of the steam-water separator, thereby achieving the separation of the steam-water mixture. Meanwhile, the gas at the top enters an external environment through the first connecting pipe on the separator body, and the liquid at the lower part also enters the external environment through the first connecting pipe on the separator body. A size of the bubble entering the external environment is limited by the inner diameter of the first connecting pipe, so that the function of breaking up the larger bubble is achieved, the cavitation phenomenon is reduced, and the problem that the steam-water separator in the prior art cannot reduce the corrosion effect on the pipeline components due to the cavitation phenomenon is finally solved.

### BRIEF DESCRIPTION OF THE DRAWINGS

In order to illustrate the embodiments of the present disclosure more clearly, the drawings used in the embodiments will be described briefly. Apparently, the following described drawings are merely for the embodiments of the present disclosure, and other drawings can be derived by those of ordinary skill in the art without any creative effort.
FIG. 1 is a schematic view of a steam-water separator according to an embodiment of the present application.
FIG. 2 is a schematic view of a steam-water separator according to another embodiment of the present application.
FIG. 3 is a block diagram of a waste heat removal system according to an embodiment of the present application.

### DETAILED DESCRIPTION OF THE EMBODIMENTS

In order to make the above obj ects, features and advantages of the present disclosure clear and easier to understand, the specific embodiments of the present disclosure are described in detail below in combination with the accompanying drawings. Many specific details are set forth in the following description to facilitate a full understanding of the present disclosure. However, the present disclosure can be implemented in many ways different from those described herein, and those skilled in the art can make similar improvements without departing from the connotation of the present disclosure. Therefore, the present disclosure is not limited by the specific embodiments disclosed below.

In the description of the present disclosure, it should be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential direction" are based on the azimuth or position relationship shown in the attached drawings, which are only for the convenience of describing the present disclosure and simplifying the description, rather than indicating or implying that the device or element must have a specific azimuth, be constructed and operated in a specific azimuth, so such terms cannot be understood as a limitation of the present disclosure.

In addition, the terms "first" and "second" are only used for descriptive purposes and cannot be understood as indicating or implying relative importance or implicitly indicating the number of indicated technical features. Thus, the features defined with "first" and "second" may explicitly or implicitly include at least one of the features. In the description of the present disclosure, "a plurality of' means at least two, such as two, three, etc., unless otherwise expressly and specifically defined.

In the present disclosure, unless otherwise expressly specified and limited, the terms "mount", "connect", "contact", "fix" and other terms should be understood in a broad sense, for example, they can be fixed connections, detachable connections, or integrated. They can be mechanical connection or electrical connection. They can be directly connected or indirectly connected through an intermediate medium. They can be the connection within two elements or the interaction relationship between two elements, unless otherwise expressly limited. For those skilled in the art, the specific meaning of the above terms in the present disclosure can be understood according to the specific situation.

In the present disclosure, unless otherwise expressly specified and limited, the first feature "above" or "below" the second feature may be in direct contact with the first and second features, or the first and second features may be in indirect contact through an intermediate medium. Moreover, the first feature is "above" the second feature, but the first feature is directly above or diagonally above the second feature, or it only means that the horizontal height of the first feature is higher than the second feature. The first feature is "below" of the second feature, which can mean that the first feature is directly below or obliquely below the second feature, or simply that the horizontal height of the first feature is less than that of the second feature.

It should be noted that when an element is called "fixed to" or "provided on" another element, it can be directly on another element or there can be a centered element. When an element is considered to be "connected" to another element, it can be directly connected to another element or there may be intermediate elements at the same time. The terms "vertical", "horizontal", "up", "down", "left", "right" and similar expressions used herein are for the purpose of illustration only and do not represent the only embodiment.

The steam-water separator in the prior art is mainly divided into the following three types:
Baffle type: A baffle or folded plate separator is composed of many baffles. The fluid changes its flow direction many times in the separator. Due to the large mass and inertia of suspended water droplets, when the flow direction changes at the baffle, the dry steam can bypass the baffle and continue to move forward, while the water droplets will accumulate on the baffle. The steam-water separator has a large flow area, which reduces the kinetic energy of water droplets, most of which will condense and finally fall to a bottom portion of the separator and be discharged through a steam trap.

Vapor cyclone Type: Vapor cyclone or centrifugal separators use a series of fins to create a high velocity cyclone that spins a flowing steam at high velocity in the separator.

Adsorption type: There is an obstacle, usually a metal mesh pad, on a steam channel inside an adsorption type separator. When encountering the obstacle, the suspended water droplets are adsorbed. When the water droplets are large to a certain extent, they fall to a bottom portion of the separator due to gravity.

The above types of steam-water separators are only suitable for working conditions of steam saturation state, and do not have the function of breaking up large bubbles, thus the corrosion effect of cavitation on the pipeline components cannot be reduced.

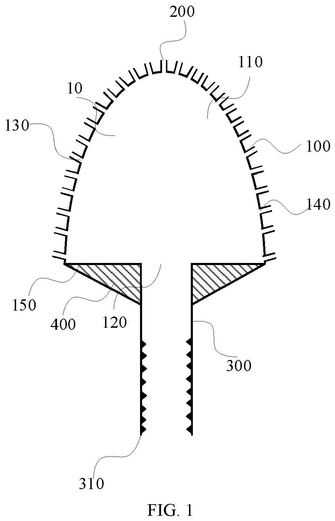

FIG. 1 is a schematic view of a steam-water separator according to an embodiment of the present application.

As shown in FIG. 1, an embodiment of the present application provides a steam-water separator 10, including a separator body 100 and first connecting pipes 200. The separator body 100 is provided with a first accommodation cavity 110, and an end of the separator body 100 is provided with a water inlet 120 in communication with the first accommodation cavity 110. The separator body 100 is provided with a plurality of first connecting holes 130 in communication with the first accommodation cavity 110, and the plurality of first connecting holes 130 may be evenly spaced apart from each other on the entire surface of the separator body 100. In other embodiments, in order to ensure the overall rigidity of the separator body 100, the plurality of first connecting holes 130 may also be provided on a part of the surface of the separator body 100. A plurality of the first connecting pipes 200 are provided, the number of the first connecting pipes 200 is the same as the number of the first connecting holes 130, and the first connection pipes 200 are connected to the first connecting holes 130 in a one-to-one correspondence. An end of the first connecting pipe 200 may be welded to the first connecting hole 130, and an inner diameter of the first connecting pipe 200 may be about 3 cm.

In use, the steam-water separator 10 is usually immersed in a cold source water pool serving as a heat sink. When the steam-water separator 10 of the embodiment of the present application is in use, steam-water mixture will flow to the water inlet 120 through a hot water outlet pipe of a waste heat removal system, and hot water enters the first accommodation cavity 110 through the water inlet 120. The first accommodation cavity 110 is separated from a cold water region outside the separator body 100 through the separator body 100, so that the cavitation phenomenon will not occur in the first accommodation cavity 110. Under the combined action of the obstruction of the separator body 100 and the bubble buoyancy, the steam-water mixture will generate a stratification effect in the first accommodation cavity 110. Lighter gas aggregates at a top portion of the steam-water separator 10, and heavier liquid aggregates at a lower part of the steam-water separator 10, thereby achieving the separation of the steam-water mixture. Meanwhile, the gas at the top portion enters an external environment through the first connecting pipe 200 on the separator body 100, and the liquid at the lower part also enters the external environment through the first connecting pipe 200 on the separator body 100. A size of the bubble entering the external environment is limited by the inner diameter of the first connecting pipe 200, so that the function of breaking up the larger bubble is achieved, the cavitation phenomenon is reduced, and the problem that the steam-water separator 10 in the prior art cannot reduce the corrosion effect on the pipeline components due to the cavitation phenomenon is finally solved.

In some embodiments, the separator body 100 includes a housing 140 and a bottom plate 150. The housing 140 may be semi-ellipsoidal or conical, so as to obtain an ellipsoidal steam-water separator 10 or a conical steam-water separator 10. The housing 140 is connected to the bottom plate 150 to enclose the first accommodation cavity 110. The water inlet 120 is provided on the bottom plate 150, the first connecting holes 130 are provided on the housing 140, and the plurality of first connecting holes 130 may be evenly spaced apart from each other on the entire surface of the housing 140. In other embodiments, in order to ensure the overall rigidity of the housing 140, the plurality of first connecting holes 130 may also be provided on a part of the surface of the housing 140, and the specific design may be flexible according to the actual situation, which is not limited herein.

In order to facilitate the connection to the hot water pipe of the waste heat removal system, in some embodiments, the steam-water separator 10 further includes a second connecting pipe 300, and one end of the second connecting pipe 300 is connected to the water inlet 120. Specifically, the end of the second connecting pipe 300 may be welded to the bottom plate 120, so as to communicate the second connecting pipe 300 with the water inlet 120, and further communicate the second connecting pipe 300 with the first accommodation cavity 110. During use, the hot water in the waste heat removal system flows into the first accommodation cavity 110 through the second connecting pipe 300. The other end of the second connecting pipe 300 is provided with an internal thread 310, and the hot water pipe in the waste heat removal system can be provided with an external thread, so that the hot water pipe in the waste heat removal system is threadedly connected to the second connecting pipe 300, and finally the steam-water separator 10 of the embodiment of the present application is connected to the waste heat removal system.

In some embodiments, the steam-water separator 10 further includes a reinforcing rib 400 in a shape of a right-angled triangle. Two right-angled sides of the reinforcing rib 400 are connected to the bottom plate 150 and the second connecting pipe 300, respectively. Specifically, a surface of the bottom plate 150 is perpendicular to a longitudinal extension direction of the second connecting pipe 300, so that the two right-angle sides of the reinforcing rib 400 are connected to an outer surface of the bottom plate 150 away from the first accommodation cavity 110 and a side surface of the second connecting pipe 300, respectively. The two right-angle sides of the reinforcing rib 400 can be welded to the bottom plate 150 and the second connecting pipe 300, respectively. The arrangement of the reinforcing rib 400 can increase the structural stability between the bottom plate 150 and the second connecting pipe 300. In other embodiments, the reinforcing rib 400 is a thin sheet of stainless steel. A plurality of reinforcing ribs 400 may be provided, and the plurality of reinforcing ribs 400 may be arranged in an annular array around an axis of the second connecting pipe 300.

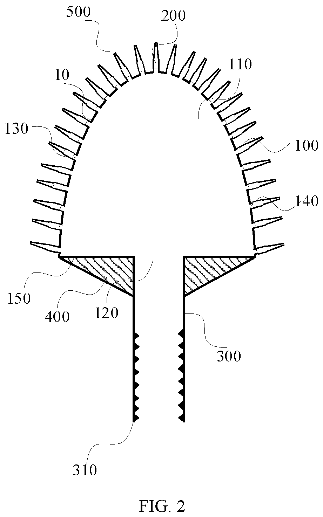

FIG. 2 is a schematic view of a steam-water separator according to another embodiment of the present application.

As shown in FIG. 2, in another embodiment, in order to enable the gas in the first accommodation cavity 110 to be ejected farther, the steam-water separator 10 further includes a plurality of nozzles 500. The number of the nozzles 500 is the same as the number of the first connecting pipes 200, and the nozzles 500 are connected to the first connecting pipes 200 in a one-to-one correspondence. The nozzle 500 is threadedly connected to the first connecting pipe 200. Specifically, the first connecting pipe 200 is provided with an external thread, and the nozzle 500 is provided with an internal thread, so that the nozzle 500 is fixed to the first connecting pipe 200 by rotating and screwing by means of the threaded connection between the nozzle 500 and the first connecting pipe 200, so as to facilitate removal and replacement of the nozzle 500.

A sum of opening areas of the plurality of nozzles 500 is greater than a cross-sectional area of the second connecting pipe 300, so as to reduce the overall resistance of the steam-water separator 10 of the embodiment of the present application. The opening area of each nozzle 500 sequentially increases from an end thereof away from the housing 140 to an end thereof connected to the housing 140. A length of the nozzle 500 can be configured to be about 10 cm. In another embodiment, a lower half part of the nozzle 500 may be cylindrical, and an upper half part of the nozzle 500 may be conical. The opening area of a conical part of the nozzle 500 increases sequentially from the end thereof away from the housing 140 to the end thereof connected to the housing 140. After the hot water enters the first accommodation cavity 110 to generate the stratification effect, the gas at the top portion enters the external environment through the nozzle 500, and the liquid at the lower part also enters the external environment through the nozzle 500. The size of the bubble entering the external environment is limited by the inner diameter of the nozzle 500, so that the function of breaking up the larger bubble is achieved, and the cavitation phenomenon is reduced.

In addition, in order to improve the steam-water separation efficiency, a diameter of a top opening of the nozzle 500 mounted on the top portion of the housing 140 is less than a diameter of the top opening of the nozzle 500 mounted on the bottom portion of the housing 140. That is, as a height of the nozzle 500 on the housing 140 decreases, the diameter of the top opening of the nozzle 500 gradually increases. The diameter of the top opening of the nozzle 500 may be configured between 0.5 cm and 2 cm.

The steam-water separator 10 provided by the embodiment of the present application includes the separator body 100 and the first connecting pipe 200. In use, the steam-water separator 10 is usually immersed in a cold source water pool serving as the heat sink. When the steam-water separator 10 of the embodiment of the present application is in use, the steam-water mixture will flow to the water inlet 120 through a hot water outlet pipe of a waste heat removal system, and hot water enters the first accommodation cavity 110 through the water inlet 120. The steam-water mixture generates the stratification effect in the first accommodation cavity 110. The lighter gas aggregates at the top portion of the steam-water separator 10, and the heavier liquid aggregates at a lower part of the steam-water separator 10, thereby achieving the separation of the steam-water mixture. Meanwhile, the gas at the top portion enters an external environment through the first connecting pipe 200 on the separator body 100, and the liquid at the lower part also enters the external environment through the first connecting pipe 200 on the separator body 100. The size of the bubble entering the external environment is limited by the inner diameter of the first connecting pipe 200, so that the function of breaking up the larger bubble is achieved, the cavitation phenomenon is reduced, and the problem that the steam-water separator 10 in the prior art cannot reduce the corrosion effect on the pipeline components due to the cavitation phenomenon is finally solved.

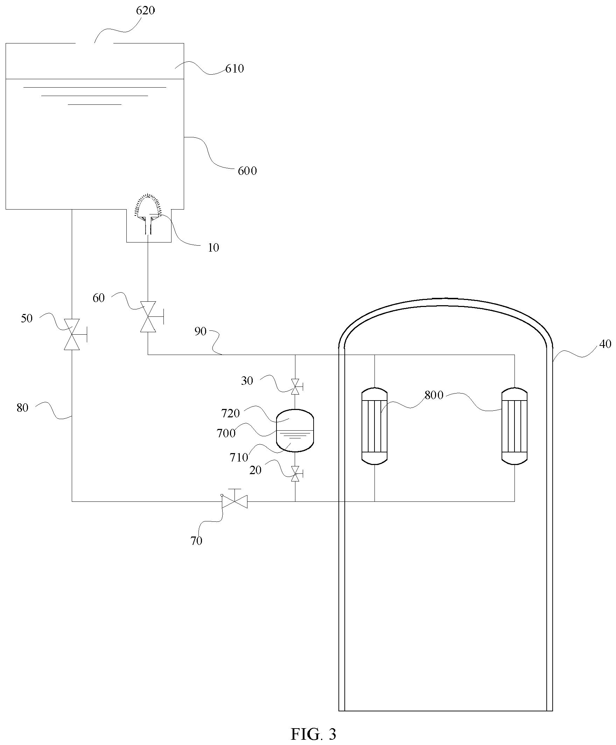

FIG. 3 is a block diagram of a waste heat removal system according to an embodiment of the present application.

As shown in FIG. 3, the embodiment of the present application further provides a waste heat removal system, which includes the aforementioned steam-water separator 10. In one embodiment, the waste heat removal system includes a water tank 600, a starting tank 700, an air-cooled heat exchanger 800, and the aforementioned steam-water separator 10. The water tank 600 is provided with a second accommodation cavity 610 and a gas outlet 620 in communication with the second accommodation cavity 610. The second accommodation cavity 610 is filled with low-temperature cold water, which serves as a heat transfer medium and a cold source for the operation of the waste heat removal system of the embodiment of the present application, and the specific amount of water can be determined according to the requirements of different reactors. When the cold water in the water tank 600 boils, the generated water vapor will enter the external atmospheric environment through the gas outlet 620, so that the external atmospheric environment becomes the final heat sink, and the waste heat is discharged to the external environment. The steam-water separator 10 is provided in the second accommodation cavity 610. In some embodiments, the bottom portion of the water tank 600 may be provided with a small sinking pit, a height of the sinking pit is slightly greater than a height of the steam-water separator 10, and a width of the sinking pit is approximately two to three times the maximum width of the steam-water separator 10, so that the steam-water separator 10 may be completely immersed in the sinking pit. When a water level of the water tank 600 is lower than an outlet of the nozzle 500 at a lowest layer of the steam-water separator 10, the waste heat removal system will stop operating. The arrangement of the sinking pit allows the water in the water tank 600 to be fully utilized, with only a small volume of water source remaining in the sinking pit cannot be completely evaporated.

The starting tank 700 is provided with a third accommodation cavity 710 and a fourth accommodation cavity 720 that are spaced apart. The third accommodation cavity 710 is configured to accommodate cooling water, and the fourth accommodation cavity 720 is configured to accommodate high-pressure nitrogen. A water inlet end of the air-cooled heat exchanger 800 is in communication with both the second accommodation cavity 610 and the third accommodation cavity 710, and a water outlet end of the air-cooled heat exchanger 800 is in communication with both the first accommodation cavity 110 and the fourth accommodation cavity 720.

The air-cooled heat exchanger 800 adopts a design of a heat exchange pipe, with cold water on an inner side of the pipe, and the atmosphere of the containment vessel 40 on an outer side of the pipe. Its function is to transfer the energy of the high-temperature gas mixture in the containment vessel 40 to the cold water on the inner side of the heat exchange pipe, so as to heat the cold water on the inner side of the heat exchange pipe. In order to increase a heat exchange area of the air-cooled heat exchanger 800, the air-cooled heat exchanger 800 may adopt finned heat exchange pipes, and in order to enhance the heat exchange effect, a plurality of air-cooled heat exchangers 800 may be arranged in the containment vessel 40, and the different air-cooled heat exchangers 800 are connected in parallel.

In some embodiments, the waste heat removal system further includes a first control valve 20 and a second control valve 30. The first control valve 20 is provided at the water inlet end of the air-cooled heat exchanger 800, so as to control the water inlet end of the air-cooled heat exchanger 800 to be connected to or disconnected from the third accommodation cavity 710. When the first control valve 20 is opened, the cold water in the third accommodation cavity 710 flows into the air-cooled heat exchanger 800 to increase the heat exchange rate of the air-cooled heat exchanger 800. When the first control valve 20 is closed, the cold water in the third accommodation cavity 710 cannot flow into the air-cooled heat exchanger 800. The second control valve 30 is provided at the water outlet end of the air-cooled heat exchanger 800, so as to control the water outlet end of the air-cooled heat exchanger 800 to be connected to or disconnected from the fourth accommodation cavity 720. When the second control valve 30 is opened, a high-pressure nitrogen in the fourth accommodation cavity 720 flows out.

In some embodiments, in order to conveniently control the pipeline circulation in the waste heat removal system provided by the embodiment of the present application, the waste heat removal system further includes a first isolation valve 50, a second isolation valve 60, and a check valve 70. One end of the second isolation valve 60 is in communication with the steam-water separator 10, the other end of the second isolation valve 60 is in communication with both the second control valve 30 and the water outlet end of the air-cooled heat exchanger 800, so as to control the steam-water separator 10 to be connected or disconnect to both the second control valve 30 and the water outlet end of the air-cooled heat exchanger 800. One end of the check valve 70 is in communication with the second accommodation cavity 610, and the other end of the check valve 70 is in communication with both the first control valve 20 and the water inlet end of the air-cooled heat exchanger 800. Two ends of the first isolating isolation valve 50 are in communication with the second accommodation cavity 610 and a water inlet end of the check valve 70, respectively, so as to control the second accommodation cavity 610 to be connected to or disconnected from the water inlet end of the check valve 70.

In an initial state of the waste heat removal system provided by the embodiment of the present application, all the valves in the system are closed, the pipeline and the air-cooled heat exchanger 800 are filled with cold water, and the waste heat removal system is opened by a high atmospheric pressure signal of the containment vessel 40. When the ambient pressure reaches a preset value, the first isolation valve 50, the second isolation valve 60, and the first control valve 20 are opened respectively, and the cold water in the second accommodation cavity 610 and the cold water in the starting tank 700 both flow into the air-cooled heat exchanger 800 through the pipeline. Driven by the cold water in the starting tank 700, the flow of the cooling water in the heat exchange pipe of the air-cooled heat exchanger 800 is accelerated, which enhances the heat dissipation capacity of the air-cooled heat exchanger 800. The heated cooling water flows into the water tank 600 through the steam-water separator 10. When the cold water in the starting tank 700 completely runs out, the first control valve 20 is triggered by a low liquid level signal of the starting tank 700 to be automatically closed, and the second control valve 30 is opened to fill the high-pressure nitrogen in the fourth accommodation cavity 720 of the starting tank 700 into the pipeline. After the nitrogen completely runs out, when the pressure in the starting tank 700 is reduced to a preset pressure value, the second control valve 30 is closed. During this process, opening degrees of the first control valve 20 and the second control valve 30 can be automatically controlled. During the water injection process, the opening degree of the first control valve 20 is gradually increased from a small value, so as to maintain a water injection flow rate within a relatively small range to prolong the water injection process. During the gas injection process, the opening degree of the second control valve 30 is gradually increased from a small value, so as to maintain a gas injection flow rate within a relatively small range to prolong the gas injection process.

After the cold water flowing into the air-cooled heat exchanger 800 is heated by the air-cooled heat exchanger 800, the hot water flows through the pipeline and flows into the water tank 600 through the steam-water separator 10. When the cold water in the water tank 600 boils, the generated water vapor will enter the external atmospheric environment through the gas outlet 620, so that the external atmospheric environment becomes the final heat sink, and the waste heat is discharged to the external environment. During this process, since a temperature of the water in a hot water pipe 90 is higher than a temperature of water in a cold water pipe 80, a density of the water in the hot water pipe 90 is less than a density of water in the cold water pipe 80, thereby generating a pressure difference between the cold water pipe 80 and the hot water pipe 90, and then the cooling water is driven to circulate along the water tank 600, the cold water pipe 80, the air cooling heat exchanger 800, the hot water pipe 90, and the water tank 600 sequentially. After the nitrogen in the starting tank 700 is injected into the hot water pipe 90, an average density of fluid in the hot water pipe 90 will be further reduced, so that the pressure difference between the cold water in the cold water pipe 80 and the hot water in the hot water pipe 90 is increased, that is, a driving force for the flow of the cooling water is increased, a flow velocity of the fluid in the heat exchange pipe of the air-cooled heat exchanger 800 is increased, and the heat exchange capacity of the air-cooled heat exchanger 800 is improved.

The hot water, which is a steam-water mixture, flows into the water tank 600 through the steam-water separator 10. The steam-water mixture generates the stratification effect in the steam-water separator 10. The lighter gas aggregates at the top portion of the steam-water separator 10, and the heavier liquid aggregates at the lower part of the steam-water separator 10, thereby achieving the separation of the steam-water mixture. Meanwhile, the larger bubbles in the gas are smashed into small bubbles under the action of the steam-water separator 10, so as to reduce the cavitation phenomenon, and further reduce the corrosion effect of the cavitation phenomenon on the hot water pipeline 90.

The waste heat removal system provided by the embodiment of the present application is driven by a high-pressure energy storage of the starting tank 700 and a fluid density difference between the cold water pipeline 80 and the hot water pipeline 90, which does not need the input of an active energy, has high safety and reliability, and does not need human intervention. The waste heat removal system can continuously remove the heat in the containment vessel 40 after an accident, thus ensuring that the pressure in the containment vessel 40 does not exceed a safety limit, and ensuring that a radioactive material is contained within the containment vessel 40.

The waste heat removal system provided by the embodiment of the present application includes the aforementioned steam-water separator 10, which includes the separator body 100 and the first connecting pipe 200. The hot water in the waste heat removal system flows through the steam-water separator 10, the hot water is the steam-water mixture, and the steam-water mixture generates the stratification effect in the separator body 100. The lighter gas aggregates at the top portion of the separator body 100, and the heavier liquid aggregates at the lower part of the separator body 100, thereby achieving the separation of the steam-water mixture. Meanwhile, the larger bubbles in the gas are limited by the inner diameter of the first connecting pipe 200, so that the function of breaking up the larger bubble is achieved, the cavitation phenomenon is reduced, and the corrosion effect of the cavitation phenomenon on the pipeline in the waste heat removal system is reduced.

The above-mentioned embodiments do not constitute a limitation on the protection scope of the technical solution. Any modifications, equivalent replacements and improvements made within the spirit and principles of the above-mentioned embodiments shall be included within the protection scope of this technical solution.

The foregoing descriptions are merely specific embodiments of the present disclosure, but are not intended to limit the protection scope of the present disclosure. Any variation or replacement readily figured out by a person skilled in the art within the technical scope disclosed in the present disclosure shall all fall within the protection scope of the present disclosure.

## Claims

1. A steam-water separator, comprising:
a separator body provided with a first accommodation cavity, an end of the separator body being provided with a water inlet in communication with the first accommodation cavity, and
the separator body being provided with a plurality of first connecting holes in communication with the first accommodation cavity; and
a plurality of first connecting pipes, wherein the number of the first connecting pipes is the same as the number of the first connecting holes, and the first connecting pipes are connected to the first connecting holes in a one-to-one correspondence.

2. The steam-water separator according to claim 1, wherein the separator body comprises a housing and a bottom plate, the housing is connected to the bottom plate to enclose the first accommodation cavity, the water inlet is provided on the bottom plate, the first connecting holes are provided on the housing.

3. The steam-water separator according to claim 2, further comprising a second connecting pipe, wherein one end of the second connecting pipe is connected to the water inlet, and the other end of the second connecting pipe is provided with an internal thread.

4. The steam-water separator according to claim 3, further comprising a reinforcing rib, wherein the reinforcing rib is in a shape of a right-angled triangle, and two right-angled sides of the reinforcing rib are connected to the bottom plate and the second connecting pipe, respectively.

5. The steam-water separator according to claim 4, wherein a plurality of reinforcing ribs are provided, and the plurality of reinforcing ribs are arranged in an annular array around an axis of the second connecting pipe.

6. The steam-water separator according to claim 3, further comprising a plurality of nozzles, wherein the number of the nozzles is the same as the number of the first connecting pipes, and the nozzles are connected to the first connecting pipes in a one-to-one correspondence.

7. The steam-water separator according to claim 6, wherein the plurality of nozzles are threadedly connected to the first connecting pipes.

8. The steam-water separator according to claim 6, wherein a sum of opening areas of the plurality of nozzles is greater than a cross-sectional area of the second connecting pipe.

9. The steam-water separator according to claim 6, wherein an opening area of each nozzle sequentially increases from an end thereof away from the housing to an end thereof connected to the housing.

10. The steam-water separator according to claim 6, wherein a diameter of a top opening of the nozzle located at a top portion of the housing is less than a diameter of a top opening of the nozzle located at a bottom portion of the housing.

11. A waste heat removal system comprising the steam-water separator according to any one of claims 1 to 10.

12. The waste heat removal system according to claim 11, further comprising:
a water tank provided with a second accommodation cavity and a gas outlet in communication with the second accommodation cavity, and the steam-water separator being provided in the second accommodation cavity;
a starting box provided with a third accommodation cavity and a fourth accommodation cavity that are spaced apart, the third accommodation cavity being configured to accommodate cooling water, and the fourth accommodation cavity being configured to accommodate high-pressure nitrogen; and
an air-cooled heat exchanger, wherein a water inlet end of the air-cooled heat exchanger is in communication with both the second accommodation cavity and the third accommodation cavity, and a water outlet end of the air-cooled heat exchanger is in communication with both the first accommodation cavity and the fourth accommodation cavity.

13. The waste heat removal system according to claim 12, further comprising:
a first control valve provided at the water inlet end of the air-cooled heat exchanger and
configured to control the water inlet end of the air-cooled heat exchanger to be connected to or
disconnected from the third accommodation cavity; and
a second control valve provided at the water outlet end of the air-cooled heat exchanger and
configured to control the water outlet end of the air-cooled heat exchanger to be connected to or disconnected from the fourth accommodation cavity.

14. The waste heat removal system according to claim 13, further comprising:
a second isolation valve, wherein one end of the second isolation valve is in communication with the steam-water separator, and the other end of the second isolation valve is in communication with both the second control valve and the water outlet end of the air-cooled heat exchanger;
a check valve, wherein one end of the check valve is in communication with the second accommodation cavity, and the other end of the check valve is in communication with both the first control valve and the water inlet end of the air-cooled heat exchanger; and
a first isolation valve, wherein both ends of the first isolation valve are in communication with the second accommodation cavity and a water inlet end of the check valve, respectively.
